# EUROPÄISCHE PATENTSCHRIFT

(11) **EP 3 472 262 B1**
(45) Veröffentlichungstag und Bekanntmachung des Hinweises auf die Patenterteilung: **28.07.2021**
(21) Anmeldenummer: 17748384.9
(22) Anmeldetag: 21.06.2017
(51) Int. Cl.: C09K 11/77, C09K 11/06, C08L 27/06, G09F 3/00, G07D 7/1205, C08K 3/22, B07C 5/342, B29B 17/02, G01N 21/64, C08K 3/34, G01N 21/85, G07D 7/202, G01N 21/84

(54) **VERFAHREN ZUR IDENTIFIKATION VON MATERIALIEN**
METHOD FOR IDENTIFYING MATERIALS
PROCÉDÉ D'IDENTIFICATION DE MATÉRIAUX

(30) Priorität: 21.06.2016 DE 102016111347; 24.04.2017 DE 102017108641
(43) Veröffentlichungstag der Anmeldung: 24.04.2019
(73) Patentinhaber: Polysecure GmbH, 79108 Freiburg (DE)
(72) Erfinder: MOESSLEIN, Jochen, 79100 Freiburg (DE); KIRCHENBAUER, Daniel, 79283 Bollschweil (DE); KATUS, Philip, 79100 Freiburg (DE); FAHR, Martin, 03130 Felixsee (DE)
(74) Vertreter: Erbacher, Martin
(86) Internationale Anmeldenummer: PCT/DE2017/100524
(87) Internationale Veröffentlichungsnummer: WO 2017/220079

(56) Entgegenhaltungen:
- WO-A1-03/072682
- WO-A1-2004/102490
- WO-A1-2005/019821
- WO-A1-2011/082794
- DE-A1-102005 045 375
- DE-A1-102012 005 542
- ZIEGLER J: "High-Quality ZnS Shells for CdSe Nanoparticles: Rapid Microwave Synthesis", LANGMUIR, AMERICAN CHEMICAL SOCIETY, US, vol. 23, 6 July 2007 (2007-07-06), pages 7751-7759, XP002550113, ISSN: 0743-7463, DOI: 10.1021/LA063528B [retrieved on 2007-06-07]

## Beschreibung

Die vorliegende Erfindung betrifft ein Verfahren zur Identifikation und/oder Unterscheidung von Materialien mittels Lumineszenz.

Weltweit besteht der Bedarf, Kunststoffinaterialen wiederzuverwerten. Hierzu müssen die Kunststoffmaterialien identifiziert und sortenrein getrennt werden. Optische Verfahren zur Trennung von Kunststoffmaterialien sind bekannt. Ebenso sind Sortierverfahren bekannt, welche auf der gezielten Markierung von Materialien mit lumineszierenden Substanzen beruhen. Hierbei besteht jedoch häufig das Problem, dass die Kunststoffmaterialen neben dem üblicherweise im wesentlichen organischen Kunststoffmaterial zumeist weitere Fremdstoffe enthalten, welche Einfluss auf die optischen Eigenschaften des Kunststoffs wie Absorption und Fluoreszenz haben können. Solche Fremdstoffe können z.B. Pigmente, Farbstoffe oder andere Additive sein. Die Begriffe Pigment und Farbstoff sollen hierbei so verstanden werden, dass auch Substanzen umfasst sind, die jenseits des sichtbaren Spektrums mit elektromagnetischer Strahlung wechselwirken. Auch der Gebrauch der Materialien kann zu Änderungen der optischen Eigenschaften führen, z.B. durch Verschmutzung. Ferner können Materialien z.B. durch Licht, Wärme oder chemische Belastung Alterungsprozessen unterworfen sein, was zu Verfärbungen oder Trübungen führen kann. Dies führt dazu, dass sich Kunststoffmaterialen derselben chemischen Klasse (z.B. Polyethylenterephthalat (PET)) z.B. durch ihre Färbung unterscheiden können. Diese Unterschiede können dazu führen, dass Absolutmessungen von z.B. Absorption, Reflexion oder Fluoreszenz bei definierten Wellenlängen oder Wellenlängenbändern zu unterschiedlichen Ergebnissen führen. Eine einheitliche optische Identifikation dieser Materialien unabhängig von den enthaltenen Fremdstoffen, dem Verschmutzungsgrad, Gebrauch oder Alter wird dadurch erheblich erschwert.

DE 10 2012 005 542 A1 offenbart ein Material, vorzugsweise ein Kunststoffmaterial, das Fremdstoffe enthält und das dadurch gekennzeichnet ist, dass das Material ferner fluoreszierende Verbindungen enthält sowie ein Verfahren zum Auftrennen einer Mischung von Materialien.

Ziegler et al., Langmuir, 2007, 23(6) 7751-7759, offenbart die Herstellung von CdSe-Nanopartikeln mit ZnS-Schale unter Mikrowellenbedingungen.

Es ist daher eine Aufgabe der Erfindung, ein Verfahren zur Identifikation und/oder Unterscheidung von Materialien, vorzugsweise Kunststoffmaterialien, bereitzustellen, welches durch Eigenschaften wie Färbung, Trübung oder Verschmutzung des zu identifizierenden Materials nicht beeinträchtigt wird.

Diese Aufgabe wird gelöst durch den Gegenstand des unabhängigen Anspruchs 1. Bevorzugte Ausführungsformen ergeben sich aus den Unteransprüchen.

Sollen Sortierverfahren genutzt werden, welche auf der gezielten Markierung von Materialien mit lumineszierenden Substanzen beruhen, dann erfordert die Vielfalt der zu sortierenden Kunststoffmaterialien eine große Anzahl unterscheidbarer Marker. Viele Marker zeigen nur unter speziellen Anregungsbedingungen unverwechselbare Emissionseigenschaften. Zur Generierung einer großen Marker-Vielfalt ist daher die Möglichkeit zur Anwendung vielfältiger Anregungsregimes wichtig.

Beispielsweise existieren Lumineszenzmarker deren Lumineszenzemission eine nichtlineare Funktion der Anregungsleistung ist, wohingegen andere die Lumineszenzemission anderer Lumineszenzmarker proportional zur Anregungsleistung ist. Die Identifikation diese nichtlinearen oder linearen Zusammenhänge erfordert daher die Anwendung mehrerer unterschiedlicher Anregungsleistungen.

Ferner können Kunststoffmaterialien mit unterschiedlichen Konzentrationen eines oder mehrerer Marker versetzt werden. Durch Einsatz von Fluoreszenzmarkern in unterschiedlichen Konzentrationen können dem markierten Material unterschiedliche Emissionseigenschaften verliehen werden. Auch die Identifikation dieser unterschiedlichen Emissionseigenschaften erfordert jeweils spezielle Anregungsbedingungen und damit vielfältige unterschiedliche Anregungsregimes.

Vorteilhaft ist daher auch ein Verfahren zur Identifikation und/oder Unterscheidung von Materialien, vorzugsweise Kunststoffmaterialien, welches eine breite Modulation der Anregungsbedingungen ermöglicht.

Zur Identifikation der unterschiedlichen Marker muss die Möglichkeit bestehen, das Lumineszenzverhalten im Hinblick auf verschiedenste Eigenschaften zu analysieren. Zu diesen Eigenschaften zählen z.B. das Emissionsverhalten über die Zeit und das spektrale Emissionsverhalten.

Die Aufgabe wird erfindungsgemäß gelöst durch ein Verfahren zur Sortierung und/oder Recycling und/oder Rezepturkontrolle von Materialien mittels Lumineszenz, wobei zumindest eine lumineszierende Substanz in das Material eingebracht und/oder auf das Material aufgebracht wird und das Lumineszenzverhalten der Substanz nach Anregung mittels Strahlung analysiert wird, wobei während oder nach einem oder mehreren Zeitintervallen die Intensität für eine oder mehrere Emissionswellenlänge(n) bestimmt wird und aus den Emissionsintensitäten für identische Emissionswellenlängen oder verschiedene Emissionswellenlängen Intensitätsverhältnisse gebildet werden.

Hierbei ist bevorzugt, dass das Lumineszenzverhalten das Lumineszenzemissionsverhalten über die Zeit ist, in dem nach dem Ende oder während der Anregung die Emission der Lumineszenz in einem festgelegten Zeitraum messtechnisch erfasst wird.

Ebenfalls ist bevorzugt, dass die Lumineszenzemission zeitlich aufgelöst wird.

Ferner ist vorgesehen, dass nach einem oder mehreren Zeitintervallen die Intensität für eine oder mehrere Emissionswellenlänge(n) bestimmt wird und aus den Emissionsintensitäten für identische Emissionswellenlängen oder verschiedene Emissionswellenlängen Intensitätsverhältnisse gebildet werden.

Vorzugsweise vorgesehen ist, dass eine Abklingkonstante für eine oder mehrere Emissions-Wellenlängen bestimmt wird.

Bevorzugt ist, dass ein Intensitätsprofil des gesamten Emissionsspektrums über die Zeit bestimmt wird.

Ebenso bevorzugt ist, dass die Lumineszenzemission über einen festgelegten Zeitraum integriert wird.

Weiterhin ist vorgesehen, dass das Lumineszenzverhalten ein spektrales Emissionsverhalten ist.

Vorgesehen ist, dass das Emissionsverhalten spektral aufgelöst wird.

Bevorzugt ist, dass eine An- und/oder Abwesenheit spezifischer Emissions-Wellenlängen bestimmt wird.

Weiter bevorzugt ist, dass eine absolute Intensität spezifischer Emissions-Wellenlängen bestimmt wird.

Ferner ist bevorzugt, dass ein Intensitätsverhältnis zwischen spezifischen Emissions-Wellenlängen und/oder Wellenlängenbereichen bestimmt wird.

Vorgesehen ist, dass ein Emissionsspektrum bestimmt wird.

Ebenfalls ist vorgesehen, dass das Emissionsverhalten spektral integriert wird.

Besonders bevorzugt ist vorgesehen, dass die Anregung der Lumineszenz zeitlich und/oder spektral und/oder durch Bestrahlungsintensität moduliert wird.

Bevorzugt ist, dass die Anregung zeitlich moduliert wird über eine Dauer einer Einzelanregung und/oder Dauer der Pulse bei mehrfach gepulster Anregung und/oder Dauer der Intervallpausen zwischen Pulsen und/oder Anzahl der Pulse.

Vorgesehen ist, dass die Anregung spektral moduliert wird über die Lage des Anregungswellenlängenmaximums und/oder die Breite der Anregungswellenlängen und/oder die Anzahl der Anregungswellenlängen.

Ebenfalls ist vorgesehen, dass die Bestrahlungsintensität moduliert wird über die Leistung der Bestrahlungsquelle und/oder den Einsatz optischer Filter.

Ferner ist bevorzugt, dass das gemessene Lumineszenzverhalten mit den Anregungseigenschaften verknüpft wird und einem Material zugeordnet wird.

Es ist bevorzugt, dass das gemessenene Lumineszenzverhalten mit den Anregungseigenschaften zu einem mathematischen Bewertungskriterium verknüpft wird.

Ebenfalls ist bevorzugt, dass das ermittelte mathematische Bewertungskriterium mit in einer Datenbank hinterlegten mathematischen Bewertungskriterien abgeglichen wird.

Weiter bevorzugt ist ein Verfahren, wobei die lumineszierende Substanz ausgewählt ist aus der Gruppe der fluoreszierenden Materialien und/oder phosphoreszierenden Materialien und/oder Upconvertern und/oder Downconvertern und/oder Materialien, welche nach Anregung eine Anregungswellenlänge reemittieren.

Auch ist ein Verfahren bevorzugt, wobei die Bestimmung der Lumineszenzeigenschaften im UV und/oder VIS und/oder IR durchgeführt wird.

In einer weiteren Ausführungsform kann vorgesehen sein, dass das Verfahren zur Identifikation und/oder Unterscheidung von Materialien durchgeführt wird, wenn die Materialien in Bewegung sind. Beispielsweise ist denkbar, zu identifizierende und/oder zu unterscheidende Materialien in ein Führungsrohr, das in im Wesentlichen aufrechter Position gehalten ist, einzubringen und die Materialien während des Fallens durch im Führungsrohr angeordnete Detektoren zu analysieren. Eine Bewegung der zu untersuchenden Materialien kann auch durch Auflegen der Materialien auf ein Förderband oder dergleichen erreicht werden. Wird das erfindungsgemäße Verfahren unter Einsatz bewegter Materialien durchgeführt, kann sowohl eine Strahlungsanregung der lumineszierenden Substanz als auch eine Analyse des Lumineszenzverhaltens dieser Substanz unter Bewegung der Materialien erfolgen.

In einer weiteren Ausführungsform ist es bevorzugt vorgesehen, die Bewegung der zu untersuchenden Materialien für die Analyse, d.h. zur Anregung und/oder Detektion, zu stoppen. Diese kurze Unterbrechung der Bewegung der zu untersuchenden Materialien kann beispielsweise durch einen, vorzugsweise kurzen, Halt des Förderbandes erreicht werden. Im Gegensatz zu Absolutmessungen wurde überraschend festgestellt, dass Relativmessungen optischer Eigenschaften, z.B. die Analyse des zeitlichen Verhaltens einer Lumineszenzemission, unempfindlich gegenüber Störgrößen wie z.B. Additiven oder aufgelagerten Verschmutzungen, sind. Eine Identifikation von Materialien unter Ausnutzung relativer Lumineszenzeigenschaften wird daher durch die inhärenten im Wesentlichen optischen Eigenschaften des zu identifizierenden Materials nicht beeinflusst.

Die Lumineszenzeigenschaften können bzw. das Lumineszenzverhalten kann auf lumineszierenden Substanzen aus der Gruppe der fluoreszierenden Materialien und/oder phosphoreszierenden Materialien und/oder Upconvertern und/oder Downconvertern und/oder Materialien, welche nach Anregung eine Anregungswellenlänge reemittieren, beruhen. Unter Lumineszenz wird die Emission elektromagnetischer Strahlung nach Eintrag von Energie verstanden. Dabei ist bevorzugt, dass der Energieeintrag über Photonen erfolgt, die beobachtete Lumineszenz somit Photolumineszenz ist. Die Photolumineszenz kann im UV und/oder VIS und/oder IR auftreten. Upconverter sind lumineszierende Substanzen, die nach Anregung Photonen emittieren, deren Wellenlänge kürzer ist als die Wellenlänge der Anregungsphotonen. Downconverter sind lumineszierende Substanzen, die nach Anregung Photonen emittieren, deren Wellenlänge länger ist als die Wellenlänge der Anregungsphotonen.

Bei lumineszierende Substanzen die aus einem anorganischen Wirtsgitter dotiert mit zwei verschiedenen Ionentypen bestehen, kann die Intensität der Lumineszenzemission eine nichtlineare Funktion der Anregungsleistung sein. Dahingegen kann die Intensität der Lumineszenzemission von lumineszierende Substanzen, die aus einem anorganischen Wirtsgitter, welches lediglich mit einer Ionenart dotiert ist, proportional zur Anregungsleistung sein.

Als Up- oder Downconverter können beispielsweise Materialien gemäß der Patentanmeldung DE102014105846A1 eingesetzt werden.

Eine Ausführungsform zeichnet sich dadurch aus, dass zur Identifikation des Materials ein Lumineszenzemissionsverhalten über die Zeit bestimmt wird.

Hierunter ist zu verstehen, dass nach dem Ende oder während der Anregung die Emission der Lumineszenz in einem festgelegten Zeitraum messtechnisch erfasst wird. Die messtechnische Erfassung kann in dem Zeitintervall nach erfolgter Anregung der Lumineszenz einmal oder mehrfach hintereinander durchgeführt werden. Hierbei kann zwischen dem Ende der Anregung und dem Beginn der ersten Messung eine festgelegte Totzeit vorgesehen sein. Die Dauer der Einzelmessungen und damit die Zeit, in der die absolute Lumineszenzintensität integriert wird, kann identisch oder verschieden sein. Die Dauer einer Einzelmessung beträgt 1µs-10ms, bevorzugt 10µs-1ms, noch bevorzugter 50µs-500µs. Dieses Verfahren eröffnet mehrere Optionen:
Nach der Anregung kann die Lumineszenzintensität für eine Emissionswellenlänge oder einen Wellenlängenbereich in festgelegten Zeitintervallen mehrfach bestimmt werden. Aus den erhaltenen absoluten Intensitäten können Intensitätsverhältnisse gebildet werden. Dies kann auch für mehrere Emissionswellenlängen oder Wellenlängenbereiche durchgeführt werden, wodurch diese Intensitätsverhältnisse für mehrere Emissionswellenlängen oder Wellenlängenbereiche gebildet werden können. Ebenso können Intensitätsverhältnisse basierend auf den Emissionsintensitäten verschiedener Wellenlängen oder Wellenlängenbereiche gebildet werden.

Auch ist bevorzugt, dass die Abklingkonstante für eine oder mehrere Emissions-Wellenlängen oder Wellenlängenbereiche bestimmt wird. Unter der Abklingkonstante wird die Zeitspanne verstanden, in der die Ausgangsintensität der Emission auf das 1/e-fache abfällt.

Auch ist bevorzugt, dass das Intensitätsprofil des gesamten Emissionsspektrums über die Zeit bestimmt wird. Die nach verschiedenen Zeiten erhaltenen Emissionsspektren können relativ miteinander verrechnet werden.

Auch wird erfindungsgemäß vorgeschlagen, mehrere Anregungen gefolgt von Messungen mit verschieden langen Integrationszeiten zur Bestimmung der Fluoreszenzintensität zu verwenden. Aus den erhaltenen Emissionsintensitäten können Intensitätsverhältnisse bestimmt werden. Dies kann für eine oder mehrere Emissionswellenlängen oder Wellenlängenbereiche, in spektraler Auflösung oder spektral integriert erfolgen.

Die absolute Lumineszenzintensität kann nach oder während der erfolgten Anregung auch nur einmal erfasst werden. Dies kann bei einer oder mehreren definierten Wellenlängen oder Wellenlängenbereichen in spektraler Auflösung erfolgen.

Hierbei wird vorgeschlagen, Intensitätsverhältnisse basierend auf den absoluten Emissionsintensitäten verschiedener Wellenlängen oder Wellenlängenbereiche zu bestimmen.

Gegebenenfalls kann zur Identifikation von Materialien auf eine Bestimmung relativer Lumineszenzeigenschaften verzichtet werden. Dies kommt in Frage, wenn die optischen Eigenschaften des Materials definiert und homogen sind, die optischen Eigenschaften des Materials nicht mit den Anregungs- und Emissionswellenlängen der lumineszierenden Materialmarker interferieren, oder eine Beeinträchtigung der Lumineszenzeigenschaften durch Alterung, Gebrauch oder Verschmutzung ausgeschlossen werden kann.

Auch ist bevorzugt, dass die An- und/oder Abwesenheit spezifischer Emissions-Wellenlängen oder Wellenlängenbereiche bestimmt wird.

Ferner ist bevorzugt, dass die absolute Intensität spezifischer Emissions-Wellenlängen oder Wellenlängenbereiche bestimmt wird.

Eine weitere Ausführungsform zeichnet sich dadurch aus, dass die Intensität der Lumineszenzemission über das gesamte Spektrum integriert wird. Dies ist vorteilhaft, wenn eine Unterscheidung verschiedener Marker basierend auf deren verschiedenen Emissionseigenschaften nicht notwendig ist und/oder extrem schwache Emissionssignale ausgewertet werden müssen.

Zur Detektion der Lumineszenzeigenschaften können verschiedene Detektoren wie Schwarzweiß-Kameras, Farb-Kameras, Photomultiplier, Spektrometer, Fotozellen, Fotodioden, Fototransistoren alleine oder in Kombination zum Einsatz kommen. In den Detektionseinrichtungen können optische Filter wie z.B. Langpass/Kurzpass/Bandpass-Filter zum Einsatz kommen.

Besonders vorteilhaft ist ein Verfahren, wobei die Anregung der Lumineszenz zeitlich und/oder spektral und/oder durch Bestrahlungsintensität moduliert wird.

Eine bevorzugte Ausführungsform zeichnet sich dadurch aus, dass die Modulation der Anregung zeitlich durch Variation der Dauer einer Einzelanregung und/oder Variation der Dauer von Anregungspulsen bei mehrfacher Anregung und/oder durch Variation der Dauer der Pausen zwischen Anregungspulsen bei mehrfacher Anregung und/oder durch Variation der Anzahl der Pulse bei mehrfacher Anregung erfolgt.

Bei mehrfacher Anregung beträgt die Anzahl der Pulse vorteilhaft 2-10, bevorzugt 2-5. Die Dauer der Anregung beträgt 1µs-100ms, 1µs-5ms, 10µs-1ms, noch bevorzugter 20µs-500µs. Die Anregungdauer kann bei Einsatz von Femtosekundenlasem auch im Femtosekunden-Bereich liegen.

Eine gepulste Anregung kann auch durch die Bewegung des zu identifizierenden Materials unter einer oder mehreren kontinuierlichen Lichtquellen dargestellt werden, z.B. durch Transport mittels eines Förderbandes. Durch Variation der Transportgeschwindigkeit kann eine Variation der Bestrahlungsdauer erreicht werden.

Ferner kann vorgesehen sein, die Größe einer Anregungszone zu modulieren. Wird das zu identifizierende Material kontinuierlich mit einer festgelegten Geschwindigkeit durch eine Anregungszone transportiert, z.B. eine Laserlinie, dann kann durch Variation der Breite der Laserlinie eine Variation der Aufenthaltsdauer des Materials in der Anregungszone und damit eine Variation der Bestrahlungsdauer erreicht werden.

Eine weitere bevorzugte Ausführungsform zeichnet sich dadurch aus, dass die Modulation der Anregung spektral durch Variation der Lage des Anregungswellenlängenmaximums bzw. der Anregungswellenlängenmaxima und/oder durch Variation der Breite der Anregungswellenlänge bzw. der Anregungswellenlängen und/oder durch Variation der Anzahl der Anregungswellenlängen erfolgt.

Bei Anregung mit definierten Anregungswellenlängen beträgt die Halbwertsbreite bevorzugt 20nm, bevorzugt 10nm, noch bevorzugter 5nm. Bei Anregung mit Wellenlängenbereichen kann die Halbwertsbreite 200nm, bevorzugt 100nm, noch bevorzugter 50nm betragen. Die Anzahl der Anregungswellenlängen und Wellenlängenbereiche kann 10, bevorzugt 5, noch bevorzugter 2 sein.

Eine weitere Ausführungsform zeichnet sich dadurch aus, dass die Modulation der Anregungsintensität durch Variation der Leistung der Bestrahlungsquelle und/oder durch die Variation optischer Filter zwischen Anregungsquelle und Material erfolgt. Die Anregungsintensität kann 0,01-1W/mm² betragen, bevorzugt 0,1W/mm²-0,5W/mm², ebenso bevorzugt 0,0001-1 W/mm².

Zur Anregung der Lumineszenz können breit- und/oder schmalbandige Quellen wie z.B. Laser, Laserdioden, lichtemittierende Dioden (LEDs), Xenonlampen, Halogenlampen einzeln oder in Kombination zur Anwendung kommen. Die Anregungsquellen können einzeln aktiviert oder gleichzeitig oder sequentiell in unterschiedlichen Kombinationen aktiviert werden. In den Anregungseinrichtungen können optische Filter wie Langpass/Kurzpass/Bandpass-Filter zum Einsatz kommen. Ferner kann eine Variation der Öffnungsweite der Anregungsquellen vorgesehen sein, um die Größe einer Anregungszone, durch welche zu identifizierendes Material transportiert wird, zu modulieren. Die Anregungszone kann auch dadurch moduliert werden, dass mehrere Anregungsquellen sequentiell hintereinander angeordnet werden und die Anzahl der aktivierten Anregungsquellen in dieser Anordnung variiert wird.

Zur Identifikation der Materialien gemäß den vorgestellten Verfahren muss eine Zuordnung zwischen den angewandten Anregungsregimes bzw. gemessenen Emissionseigenschaften einerseits und den markierten Materialien andererseits hergestellt werden.

Dabei ist bevorzugt, dass Anregungsregimes und/oder Emissionseigenschaften zu einem mathematischen Bewertungskriterium verknüpft werden. Durch experimentelle Bestimmung kann für jedes, einen bestimmten Marker enthaltendes Material, ein mathematisches Soll-Bewertungskriterium bestimmt und in einer Datenbank hinterlegt werden. Bei Durchführung der Identifikation werden die erhaltenen Bewertungskriterien mit den in der Datenbank zuvor hinterlegten Bewertungskriterien abgeglichen und auf diese Weise eine Identifikation ermöglicht.

Die erfindungsgemäßen Verfahren können zur Identifikation und/oder Sortierung und/oder Recycling und/oder Authentifizierung und/oder Qualitätskontrolle und/oder Rezepturkontrolle von Materialien genutzt werden.

Im Folgenden soll die vorliegende Erfindung unter Bezugnahme auf konkrete Ausführungsbeispiele weiter erläutert werden.

### Ausführungsbeispiel 1

Zwei Sorten PVC-Material, die mit zwei unterschiedlichen lumineszierenden Substanzen markiert waren, wurden in einer Testanlage, die einen Recyclingvorgang simuliert, verwendet. Bei den Lumineszenzmarkern handelte es sich um Gd_{1,798}Yb_{0,2}Ho_{0.002}O₃ und Y_{1,8992}Yb_{0,1}Ho_{0,0008}O₃. Die Lumineszenzmarker unterscheiden sich in der Abklingkonstante der Lumineszenz. Das gesamte Material wurde zunächst mittels einer Hammermühle grob zerkleinert, um Teilchengrößen von etwa 0,2 bis 2,0 cm zu erhalten.

Nach der Zerkleinerung wurde das Mahlgut in einer Sortiermaschine durch eine Laserlinie transportiert, wodurch die eingebrachten Lumineszenzmarker angeregt wurden. Die Anregung erfolgte bei 980nm. Die Bestrahlungszeit betrug 1ms. Ein optisches Detektionssystem analysierte und identifizierte die Abklingkonstanten der Lumineszenz jedes Materialteilchens. Basierend auf der Abklingkonstante als Sortierkriterium wurden Ausblasdüsen angesteuert und die Materialteilchen entsprechend der ihnen zugewiesenen Abklingkonstante in verschiedene Behälter sortiert. Die Sortierung der Materialteilchen erfolgte durch Ausblasdüsen, die bereits in üblichen Sortieranlagen vorhanden sind.

### Ausführungsbeispiel 2

Zwei Objekt-Sorten, im vorliegenden Fall zwei verschiedene Sorten Kunststoffbehälter, die mit zwei unterschiedlichen lumineszierenden Substanzen markiert waren, wurden in einer Testanlage, die einen Recyclingvorgang simuliert, verwendet. Bei den Lumineszenz Markern handelte es sich um Gd_{1,82} Yb_{0,18} O₃ (M1) und Gd_{1,51} Yb_{0,49} O₃ (M2). Die Lumineszenz Marker unterschieden sich in der Abklingkonstante der Lumineszenz.

Die Objekte wurden in einer Sortiermaschine durch eine Laserlinie transportiert, wodurch die eingebrachten Lumineszenz Marker angeregt wurden. Die Anregung erfolgte bei 980nm. Die Bestrahlungszeit betrug 500µs. Ein optisches Detektionssystem analysierte und identifizierte die Abklingkonstanten der Lumineszenz jedes Objekts. Basierend auf der Abklingkonstante als Sortierkriterium wurden die Objekte entsprechend der ihnen zugewiesenen Abklingkonstante in verschiedene Behälter sortiert. Die Sortierung der Objekte erfolgte durch Vorrichtungen, die bereits in üblichen Sortieranlagen vorhanden sind.

### Ausführungsbeispiel 3

Zwei Sorten PVC-Material, die mit zwei unterschiedlichen lumineszierenden Substanzen markiert waren, wurden in einer Testanlage, die einen Recyclingvorgang simuliert, verwendet. Bei den Lumineszenz Markern handelte es sich um Gd₁,₈₂ Yb_{0,18} O₃ (M1) und Gd_{1.51} Yb_{0,49} O₃ (M2). Die Lumineszenz von Marker M2 klingt schneller ab als die Lumineszenz von Marker M1.

Nach Zerkleinerung der Materialien wurde das Mahlgut in einer Sortiermaschine durch eine Laserlinie transportiert, wodurch die eingebrachten Lumineszenz Marker angeregt wurden. Die Anregung erfolgte bei 980nm. Die Bestrahlungszeit betrug 500µs. Ein optisches Detektionssystem detektierte die Intensität der Lumineszenz Emission I jedes Materialteilchens bei derselben Emissionswellenlänge zu zwei aufeinanderfolgenden Zeitpunkten t1 und t2 und bestimmte Intensitätsverhältnisse I tl/I t2. Da M2 schneller abklingt als M1 war das Intensitätsverhältnis für M2 größer als das Intensitätsverhältnis für M1. Basierend auf dem Intensitätsverhältnis als Sortierkriterium wurden Ausblasdüsen angesteuert und die Materialteilchen entsprechend des ihnen zugewiesenen Intensitätsverhältnisses in verschiedene Behälter sortiert. Die Sortierung der Materialteilchen erfolgte durch Ausblasdüsen, die bereits in üblichen Sortieranlagen vorhanden sind.

### Ausführungsbeispiel 4

Ein Leuchtstoff basierend auf Gadoliniumoxysulfid, dotiert mit Erbium und Ytterbium (M3) wurden thermisch für etwa 60 Minuten bei etwa 1650°C behandelt. Hierdurch wurde der modifizierte Leuchtstoff M4 erhalten. Durch die thermische Behandlung änderte sich das Verhältnis zwischen der Lumineszenzintensität im roten Spektralbereich und der Lumineszenzintensität im grünen Spektralbereich (I λ _{ROT}/I λ _{GRÜN}). I λ _{ROT}/I λ _{GRÜN} von M4 ist größer als I λ _{ROT}/I λ _{GRÜN} von M3.

Zwei Sorten PVC-Material, wobei eine Sorte mit M3 und die andere Sorte mit M4 markiert war, wurden in einer Testanlage, die einen Recyclingvorgang simuliert, verwendet. Nach Zerkleinerung der Materialien wurde das Mahlgut in einer Sortiermaschine durch eine Laserlinie transportiert, wodurch die eingebrachten Lumineszenzmarker angeregt wurden. Ein optisches Detektionssystem detektierte die Intensität der Lumineszenzemission I jedes Materialteilchens im roten und grünen Spektralbereich und bestimmte das Intensitätsverhältnis I λ _{ROT}/I λ _{GRÜN}. Basierend auf dem Intensitätsverhältnis als Sortierkriterium wurden Ausblasdüsen angesteuert und die Materialteilchen entsprechend des ihnen zugewiesenen Intensitätsverhältnisses in verschiedene Behälter sortiert. Die Sortierung der Materialteilchen erfolgte durch Ausblasdüsen, die bereits in üblichen Sortieranlagen vorhanden sind.

### Ausführungsbeispiel 5

Drei Sorten PVC-Material, von denen zwei Sorten mit unterschiedlichen lumineszierenden Substanzen markiert waren und eine Sorte nicht markiert war, wurden in einer Testanlage, die einen Recyclingvorgang simuliert, verwendet. Bei den Lumineszenz Markern handelte es sich um Gd_{1,82} Yb_{0,18} O₃ (M1) und Gd_{1,51} Yb_{0,49} O₃ (M2).

Nach Zerkleinerung der Materialien wurde das Mahlgut in einer Sortiermaschine durch eine Laserlinie transportiert, wodurch die eingebrachten Lumineszenz Marker angeregt wurden. Die Anregung erfolgte bei 980nm. Ein optisches Detektionssystem detektierte die Intensität der Lumineszenz Emission jedes Materialteilchens. Basierend auf der Intensität der Lumineszenz Emission als Sortierkriterium wurden Ausblasdüsen angesteuert und die Materialteilchen entsprechend der ihnen zugewiesenen Schwellenwert Intensität in verschiedene Behälter sortiert. Die Sortierung der Materialteilchen erfolgte durch Ausblasdüsen, die bereits in üblichen Sortieranlagen vorhanden sind. Bei einer Bestrahlungszeit von 350µs lag nur die Lumineszenz Intensität von M1 über der als Sortierkriterium festgelegten Schwellenwert Intensität. Aussortiert wurde daher nur die mit M1 markierte Sorte. Bei einer Bestrahlungszeit von 500µs lag die Lumineszenz Intensität von M1 und M2 über der als Sortierkriterium festgelegten Schwellenwert Intensität. Aussortiert wurden daher sowohl die mit M1 markierte, als auch die mit M2 markierte Sorte. Werden die Bestrahlungszeiten von 350 und 500µs in einem mehrstufigen Sortierprozess sequentiell eingesetzt, kann im ersten Schritt die mit M1 markierte Sorte und im zweiten Schritt die mit M2 markierte Sorte aussortiert werden.

### Ausführungsbeispiel 6

Drei Sorten PVC-Material, von denen zwei Sorten mit unterschiedlichen lumineszierenden Substanzen markiert waren und eine Sorte nicht markiert war, wurden in einer Tstanlage, die einen Recyclingvorgang simuliert, verwendet. Bei den Lumineszenz Markern handelte es sich um Gd_{1.82} Yb_{0,18} O₃ (M1) und 2,5-Bis(5-tert-butyl-benzoxazol-2-yl)thiophene (M5). M1 wurde durch Bestrahlung mit IR-Licht zur Lumineszenz angeregt, während M5 durch UV-Licht zur Lumineszenz angeregt wurde.

Nach Zerkleinerung der Materialien wurde das Mahlgut in einer Sortiermaschine durch eine Laserlinie transportiert, wodurch die eingebrachten Lumineszenz Marker angeregt wurden. Die Anregung von M1 erfolgte bei 980nm, die Anregung von M5 bei 365nm. Ein optisches Detektionssystem detektierte die Intensität der Lumineszenz Emission jedes Materialteilchens. Basierend auf der Intensität der Lumineszenz Emission als Sortierkriterium wurden Ausblasdüsen angesteuert und die Materialteilchen entsprechend der ihnen zugewiesenen Schwellenwert Intensität in verschiedene Behälter sortiert. Die Sortierung der Materialteilchen erfolgte durch Ausblasdüsen, die bereits in üblichen Sortieranlagen vorhanden sind. Erfolgte die Anregung bei 980nm, dann lag nur die Lumineszenz Intensität von M1 über der als Sortierkriterium festgelegten Schwellenwert Intensität. Aussortiert wurde daher nur die mit M1 markierte Sorte. Erfolgte die Anregung bei 365nm, dann lag nur die Lumineszenz Intensität von M5 über der als Sortierkriterium festgelegten Schwellenwert Intensität. Aussortiert wurde daher nur die mit M5 markierte Sorte. Werden beide Anregungswellenlängen gleichzeitig verwendet, dann können die mit M1 und M5 markierten Sorten gleichzeitig aussortiert werden. Werden die verschiedenen Anregungswellenlängen in einem mehrstufigen Sortierprozess sequentiell eingesetzt, kann in einer Sortierstufe die mit M1 markierte Sorte und in der anderen Sortierstufe die mit M2 markierte Sorte aussortiert werden.

### Ausführungsbeispiel 7

Drei Sorten PVC-Material, von denen zwei Sorten mit unterschiedlichen Konzentrationen einer lumineszierenden Substanz markiert waren und eine Sorte nicht markiert war, wurden in einer Testanlage, die einen Recyclingvorgang simuliert, verwendet. Bei dem Lumineszenz Markern handelt es sich um Gd_{1,82} Yb₀,₁₈ O₃ (M1). Die Anregung von M1 erfolgte bei 980nm. Bei gleicher Anregungswellenlänge erfordert die Lumineszenz Anregung des Materials mit der höheren M1-Konzentration eine geringere Anregungsenergie als die Lumineszenz Anregung des Materials mit der geringeren M1-Konzentration.

Nach Zerkleinerung der Materialien wurde das Mahlgut in einer Sortiermaschine durch eine Laserlinie transportiert, wodurch die eingebrachten Lumineszenz Marker angeregt wurden. Ein optisches Detektionssystem detektierten die Intensität der Lumineszenz Emission jedes Materialteilchens. Basierend auf der Intensität der Lumineszenz Emission als Sortierkriterium wurden Ausblasdüsen angesteuert und die Materialteilchen entsprechend der ihnen zugewiesenen Schwellenwert Intensität in verschiedene Behälter sortiert. Die Sortierung der Materialteilchen erfolgte durch Ausblasdüsen, die bereits in üblichen Sortieranlagen vorhanden sind. Betrug die Leistung der Bestrahlungsquelle 0,1 W/mm², dann lag nur die Lumineszenz Intensität des Materials mit der höheren Konzentration von M1 über der als Sortierkriterium festgelegten Schwellenwert Intensität. Aussortiert wurde daher nur die mit der höheren M1-Konzentration markierte Sorte. Bei einer Leistung von 0,5 W/mm² lag die Lumineszenz Intensität beider markierter Material-Sorten über der als Sortierkriterium festgelegten Schwellenwert Intensität. Aussortiert wurden daher sowohl die mit einer hohen M1-Konzentration markierte, als auch die mit einer geringeren M1-Konzentration markierte Sorte. Werden die Leistungen von 0,1W/mm² und 0,5 W/mm² in einem mehrstufigen Sortierprozess sequentiell eingesetzt, kann im ersten Schritt die mit einer hohen M1-Konzentration markierte Sorte und im zweiten Schritt die mit einer geringeren M1-Konzentration markierte Sorte aussortiert werden.

### Ausführungsbeispiel 8

Drei Sorten PVC-Material, die mit unterschiedlichen lumineszierenden Substanzen markiert waren, wurden identifiziert und sortiert. Bei den Lumineszenz Markern handelte es sich um Gd_{1,82} Yb_{0,18} O₃ (M1), Gd_{1,51} Yb_{0,49} O₃ (M2) und 2,5-Bis(5-tert-butyl-benzoxazol-2-yl)thiophene (M5). Die Anregung von M1 und M2 erfolgte bei 980nm, die Anregung von M5 durch UV-Licht Die Lumineszenz Anregung von M1 erforderte eine geringere Anregungsenergie als die Anregung von M2.

Die Sorten wurden verschiedenen Anregungsregimes unterzogen, welche sich in der Intensität und der Anregungswellenlänge unterschieden. Für jedes Anregungsregime wurde das Lumineszenz Verhalten der Sorten gemessen. Analysiert wurde, ob die LumineszenzIntensität und die Abklingkonstante vorbestimmte Sollwerte erreichte. Die Identifikation der Sorten war durch Abgleich der auf diese Weise erhaltenen Anregungs-Lumineszenz-Wertepaare mit experimentell bestimmten und in einer Datenbank hinterlegten Anregungs-Lumineszenz-Wertepaare möglich. Tabelle 1 gibt eine Übersicht über die erhaltenen Anregungs-Lumineszenz-Wertepaare. Für jeden Marker ergibt sich ein charakteristisches Muster aus Anregungsregimes und Sollwerterfüllung. Dieses Muster ermöglicht die eindeutige Identifikation des enthaltenen Markers und damit die eindeutige Identifikation und Sortierung der Material Sorte.

**Tabelle 1:**

| Anregungsregime | Lumineszenzanregung | | | Erfüllung der Sollwerte (Intensität, Abklingkonstante) | | |
|---|---|---|---|---|---|---|
| | 980nm 0,1W/mm² | 980nm 0,5W/mm² | UV | M1 | M2 | M3 |
| 1 | x | | | ja | nein | nein |
| 2 | | x | | ja | ja | nein |
| 3 | | | x | nein | nein | ja |
| 4 | x | x | | ja | ja | nein |
| 5 | x | | x | ja | nein | ja |
| 6 | | x | x | ja | ja | ja |
| 7 | x | x | x | ja | ja | ja |

### Ausführungsbeispiel 9

Drei Sorten PVC-Material, von denen zwei Sorten mit unterschiedlichen lumineszierenden Substanzen markiert waren (M1, M3) und eine Sorte nicht markiert war, wurden in einer Testanlage, die einen Recyclingvorgang simuliert, verwendet. Bei den Lumineszenzmarkern handelt es sich um Gadoliniumoxysulfid, dotiert mit Erbium und Ytterbium (M3) und Gd_{1,82} Yb_{0,18} O₃ (M1). Die Lumineszenzemission von M3 ist eine nichtlineare Funktion der Anregungsleistung, wohingegen die Lumineszenzemission von M1 proportional zur Anregungsleistung ist. Die Anregung von M1 und M3 erfolgte bei 940nm.

Nach Zerkleinerung der Materialien wurde das Mahlgut in einer Sortiermaschine mit einem Laser zweimal bestrahlt, sodass die eingebrachten Lumineszenzmarker angeregt wurden. Ein optisches Detektionssystem detektiert die Intensität der Lumineszenzemission jedes Materialteilchens bei den Anregungsintensitäten von P1=0.001 W/mm² und P2=0.005W/mm². Nicht markierte Partikel werden aufgrund der fehlenden Lumineszenzemission erkannt und aussortiert. Die markierten Partikel (M1, M3) wurden auf Basis der Lumineszenzemission Il bei Anregungsintensität P1 und der Lumineszenzemission I2 bei Anregungsintensität P2 sortiert. Die Sortierung erfolgte sequentiell durch die Ansteuerung von Ausblasdüsen bei dem ihnen zugewiesenen Sollwert.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verfahren zur Sortierung und/oder Recycling und/oder Rezepturkontrolle von Materialien mittels Lumineszenz, wobei zumindest eine lumineszierende Substanz in das Material eingebracht und/oder auf das Material aufgebracht wird und das Lumineszenzverhalten der Substanz nach Anregung mittels Strahlung analysiert wird,
wobei während oder nach einem oder mehreren Zeitintervallen die Intensität für eine oder mehrere Emissionswellenlänge(n) bestimmt wird und aus den Emissionsintensitäten für identische Emissionswellenlängen oder verschiedene Emissionswellenlängen Intensitätsverhältnisse gebildet werden.

2. Verfahren nach Anspruch 1, wobei das Lumineszenzverhalten das Lumineszenzemissionsverhalten über die Zeit ist, in dem nach dem Ende oder während der Anregung die Emission der Lumineszenz in einem festgelegten Zeitraum messtechnisch erfasst wird.

3. Verfahren nach einem der vorangegangenen Ansprüche, wobei das Lumineszenzverhalten ein spektrales Emissionsverhalten ist.

4. Verfahren nach Anspruch 3 wobei das Emissionsverhalten spektral aufgelöst wird.

5. Verfahren nach Anspruch 4, wobei eine An- und/oder Abwesenheit spezifischer Emissions-Wellenlängen bestimmt wird.

6. Verfahren nach Anspruch 4, wobei eine absolute Intensität spezifischer Emissions-Wellenlängen bestimmt wird.

7. Verfahren nach Anspruch 4, wobei ein Intensitätsverhältnis zwischen spezifischen Emissions-Wellenlängen und/oder Wellenlängenbereichen bestimmt wird.

8. Verfahren nach Anspruch 4, wobei ein Emissionsspektrum bestimmt wird.

9. Verfahren nach Anspruch 3, wobei das Emissionsverhalten spektral integriert wird.

10. Verfahren nach einem der vorangehenden Ansprüche, wobei die Anregung der Lumineszenz zeitlich und/oder spektral und/oder durch Bestrahlungsintensität moduliert wird.

11. Verfahren nach einem der vorangehenden Ansprüche, wobei das gemessene Lumineszenzverhalten mit den Anregungseigenschaften verknüpft wird und einem Material zugeordnet wird.

12. Verfahren nach einem der vorangehenden Ansprüche 1 bis 11, wobei die lumineszierende Substanz ausgewählt ist aus der Gruppe der fluoreszierenden Materialien und/oder phosphoreszierenden Materialien und/oder Upconvertern und/oder Downconvertern und/oder Materialien, welche nach Anregung eine Anregungswellenlänge reemittieren.

13. Verfahren nach einem der vorangehenden Ansprüche 1-12, wobei die Bestimmung der Lumineszenzeigenschaften im UV und/oder VIS und/oder IR durchgeführt wird.

## Claims

1. Process for sorting and/or recycling and/or formulation control of materials by luminescence, wherein at least one luminescing substance is introduced into the material and/or applied to the material and the luminescence behaviour of the substance is analyzed after excitation using radiation,
wherein during or after one or more time intervals the intensity for one or more emission wavelengths is determined and the emission intensities for identical emission wavelengths or different emission wavelengths are used to form intensity ratios.

2. Process according to Claim 1, wherein the luminescence behaviour is the luminescence emission behaviour over time, in which after the end or during the excitation the emission of the luminescence in a defined time period is analytically captured.

3. Process according to any of the preceding claims, wherein the luminescence behaviour is a spectral emission behaviour.

4. Process according to Claim 3, wherein the emission behaviour is spectrally resolved.

5. Process according to Claim 4, wherein the presence and/or absence of specific emission wavelengths is determined.

6. Process according to Claim 4, wherein an absolute intensity of specific emission wavelengths is determined.

7. Process according to Claim 4, wherein an intensity ratio between specific emission wavelengths and/or wavelength ranges is determined.

8. Process according to Claim 4, wherein an emission spectrum is determined.

9. Process according to Claim 3, wherein the emission behaviour is spectrally integrated.

10. Process according to any of the preceding claims, wherein the excitation of the luminescence is modulated temporally and/or spectrally and/or by irradiation intensity.

11. Process according to any of the preceding claims, wherein the measured luminescence behaviour is related to the excitation properties and assigned to a material.

12. Process according to any of the preceding Claims 1 to 11, wherein the luminescing substance is selected from the group of fluorescing materials and/or phosphorescing materials and/or upconverters and/or downconverters and/or materials which re-emit an excitation wavelength after excitation.

13. Process according to any of the preceding Claims 1-12, wherein the determining of the luminescence properties is performed in the UV and/or VIS and/or IR range.

## Revendications

1. Procédé de tri et/ou de recyclage et/ou de contrôle de formulation de matériaux par luminescence, au moins une substance luminescente étant introduite dans le matériau et/ou appliquée sur le matériau et le comportement en termes de luminescence de la substance étant analysé après excitation par rayonnement, l'intensité pour une ou plusieurs longueurs d'onde d'émission étant déterminée pendant ou après un ou plusieurs intervalles de temps et des rapports d'intensité étant formés à partir des intensités d'émission pour des longueurs d'onde d'émission identiques ou des longueurs d'onde d'émission différentes.

2. Procédé selon la revendication 1, le comportement en termes de luminescence étant le comportement en termes d'émission de luminescence au cours du temps, dans lequel l'émission de la luminescence est mesurée pendant une durée déterminée après la fin ou au cours de l'excitation.

3. Procédé selon l'une des revendications précédentes, le comportement en termes de luminescence étant un comportement d'émission spectrale.

4. Procédé selon la revendication 3, le comportement en termes d'émission étant résolu spectralement.

5. Procédé selon la revendication 4, une présence et/ou une absence de longueurs d'onde d'émission spécifiques étant déterminées.

6. Procédé selon la revendication 4, une intensité absolue de longueurs d'onde d'émission spécifiques étant déterminée.

7. Procédé selon la revendication 4, un rapport d'intensité entre des longueurs d'onde d'émission et/ou des plages de longueurs d'onde spécifiques étant déterminé.

8. Procédé selon la revendication 4, un spectre d'émission étant déterminé.

9. Procédé selon la revendication 3, le comportement en termes d'émission étant spectralement intégré.

10. Procédé selon l'une des revendications précédentes, l'excitation de la luminescence étant modulée temporellement et/ou spectralement et/ou par intensité d'irradiation.

11. Procédé selon l'une des revendications précédentes, le comportement en termes de luminescence mesurée étant lié aux propriétés d'excitation et associé à un matériau.

12. Procédé selon l'une des revendications précédentes 1 à 11, la substance luminescente étant choisie dans le groupe des matériaux fluorescents et/ou phosphorescents et/ou des élévateurs et/ou des abaisseurs et/ou des matériaux qui réémettent une longueur d'onde d'excitation après excitation.

13. Procédé selon l'une des revendications précédentes 1 à 12, la détermination des propriétés de luminescence étant réalisée dans la gamme des ondes UV et/ou visibles et/ou IR.
